# EUROPEAN PATENT SPECIFICATION

(11) **EP 4 396 069 B1**
(45) Date of publication and mention of the grant of the patent: **05.11.2025**
(21) Application number: 22769347.0
(22) Date of filing: 31.08.2022
(51) Int. Cl.: B62K 23/06, B62M 25/04

(54) **BICYCLE GEAR SELECTING DEVICE**
FAHRRAD-GANGWAHLGERÄT
DISPOSITIF DE SELECTION DE VITESSES D'UNE BICYCLETTE

(30) Priority: 31.08.2021 GB 202112391
(43) Date of publication of application: 10.07.2024
(73) Proprietor: BROMPTON BICYCLE LIMITED, Middlesex UB6 0FD (GB)
(72) Inventor: KELLY, David, London, Middlesex UB6 0FD (GB)
(74) Representative: Forresters IP LLP
(86) International application number: PCT/GB2022/052228
(87) International publication number: WO 2023/031604

(56) References cited:
- US-A- 2 560 154
- US-A- 2 902 882
- US-A- 865 805
- HARRIS CYCLERY: "Installing Sturmey-Archer Gear Shift Cables", 16 June 2021 (2021-06-16), XP055912214, Retrieved from the Internet <URL:https://web.archive.org/web/20210616115637/https://www.sheldonbrown.com/sturmey-archer/cable.html> [retrieved on 20220412]

## Description

### Field

The present disclosure relates to a bicycle component, and in particular a device for selecting the gear of a bicycle.

### Background

With respect to such devices, these typically employ a mechanism for selecting a particular required gear of the bicycle, such as any of a first, second, third or fourth gear of the bicycle (depending on how many gears the bicycle has). Once the mechanism is engaged, this mechanism then engages with an actuator cable inside the device, which then extends out the device towards the gearing portion of the bicycle, to implement the gear change to the appropriate gear. With respect to any such actuator cable, there are often times when it is necessary to remove the actuator cable from the device, with a view to then replacing the same, or a new, actuator cable into the device at a later stage. This replacement process, however, can be difficult and time consuming as the user cannot invariably see inside the device as the actuator cable is being re-inserted into the device.

Various approaches are therefore described herein which seek to help address or mitigate some of these issues, through allowing the user to better view inside the device during any such replacement process of the actuator cable.

### Relevant prior art

Document "Installing Sturmey-Archer Gear Shift Cables", from Harris Cyclery of 16. June 2021; discloses a device for selecting the gear of a bicycle and configured to move between a first position and a second position, the device comprising: a casing comprising a cavity for receiving an actuator cable inside the casing, wherein the casing comprises a guide; a lever which is moveable with respect to the casing, and which is moveable along the guide of the casing, for selecting the gear of the bicycle; a first opening in the casing for allowing the cable to be inserted into the cavity through the first opening, wherein the first opening is entirely located within the guide; a viewing portion configured for allowing light into the cavity as the cable is inserted into the cavity through the first opening, wherein the viewing portion is entirely located within the guide, wherein the viewing portion comprises a maximum width which is at least 2mm and which is no wider than a maximum width of the guide; and a moveable portion which is configured to move between the first position and the second position, wherein the moveable portion comprises the lever; wherein the first position, the first opening is completely covered by the moveable portion for preventing the cable to be inserted into the cavity through the first opening; and wherein the first position, the viewing portion is completely covered by the moveable portion; and wherein the second position, the first opening is exposed for allowing the allowing the cable to be inserted into the cavity through the first opening; and wherein the second position, the viewing portion is exposed. T

### Summary of the Invention

According to the invention there is provided a device, for selecting the gear of a bicycle, and configured to move between a first position and a second position, the device comprising:
a casing comprising a cavity for receiving an actuator cable inside the casing, wherein the casing comprises a rail;
a lever which is moveable with respect to the casing, and which is moveable along the rail of the casing, for selecting the gear of the bicycle;
a first opening in the casing for allowing the cable to be inserted into the cavity through the first opening, wherein the first opening is entirely located within the rail;
a viewing portion configured for allowing light into the cavity as the cable is inserted into the cavity through the first opening, wherein the viewing portion is entirely located within the rail, wherein the viewing portion comprises a maximum width which is at least 2mm and which is no wider than a maximum width of the rail; and
a moveable portion which is configured to move between the first position and the second position, wherein the moveable portion comprises the lever;
wherein the first position, the first opening is completely covered by the moveable portion for preventing the cable to be inserted into the cavity through the first opening; and wherein the first position, the viewing portion is completely covered by the moveable portion; and
wherein the second position, the first opening is exposed for allowing the allowing the cable to be inserted into the cavity through the first opening; and wherein the second position, the viewing portion is exposed.

According to a second aspect of certain embodiments there is provided a handlebar, for a bicycle, comprising the device according to the first aspect.

According to a third aspect of certain embodiments there is provided a bicycle comprising the device according to the first aspect.

According the invention there is provided a method of inserting an actuator cable into a device for selecting the gear of a bicycle, the method comprising:
moving the device from a first position to a second position;
allowing, in the second position of the device, light into a cavity of a casing from the device, using a viewing portion from the device; and
inserting, in the second position of the device, and whilst allowing the light into the cavity using the viewing portion, the actuator cable into the cavity of the casing, by inserting the actuator cable through a first opening in the casing;
wherein moving the device from the first position to the second position comprises moving a moveable portion of the device which is configured to move between the first position and the second position; wherein the moveable portion comprises a lever from the device which is moveable with respect to the casing, and which is moveable along a rail of the casing, for selecting the gear of the bicycle;
wherein the first position, the first opening is completely covered by the moveable portion for preventing the cable to be inserted into the cavity through the first opening; and wherein the first position, the viewing portion is completely covered by the moveable portion; and
wherein the second position, the first opening is exposed for allowing the allowing the cable to be inserted into the cavity through the first opening; and wherein the second position, the viewing portion is exposed;
wherein the first opening is entirely located within the rail; and
wherein the viewing portion is entirely located within the rail; and wherein the viewing portion comprises a maximum width which is at least 2mm and which is no wider than a maximum width of the rail.

It will be appreciated that features and aspects of the disclosure described above in relation to the various aspects of the disclosure are equally applicable to, and may be combined with, embodiments of the disclosure according to other aspects of the disclosure as appropriate, and not just in the specific combinations described herein, not departing from the scope of the invention which is solely defined by the appended claims.

### Brief Description of the Drawings

Embodiments of the invention will now be described, by way of example only, with reference to the accompanying drawings, in which:
Figure 1A schematically represents in perspective view a device for selecting the gear of a bicycle, and which shows how an actuator cable may be configured to be inserted inside a casing of the device;
Figure 1B schematically represents a cutaway view of the device from Figure 1A, and which shows how an actuator cable may be configured to be inserted inside the casing of the device;
Figure 2 schematically represents a perspective view of a device, for selecting the gear of a bicycle, comprising a first opening in the casing for allowing an actuator cable to be inserted into the cavity through the first opening;
Figure 3A schematically represents a perspective view of a device, for selecting the gear of a bicycle, employing a first opening in the casing for allowing an actuator cable to be inserted into the cavity through the first opening, and which further comprises a viewing portion configured for allowing light into the cavity as the cable is inserted into the cavity through the first opening; and
Figure 3B schematically represents a second perspective view of the device from Figure 3A.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

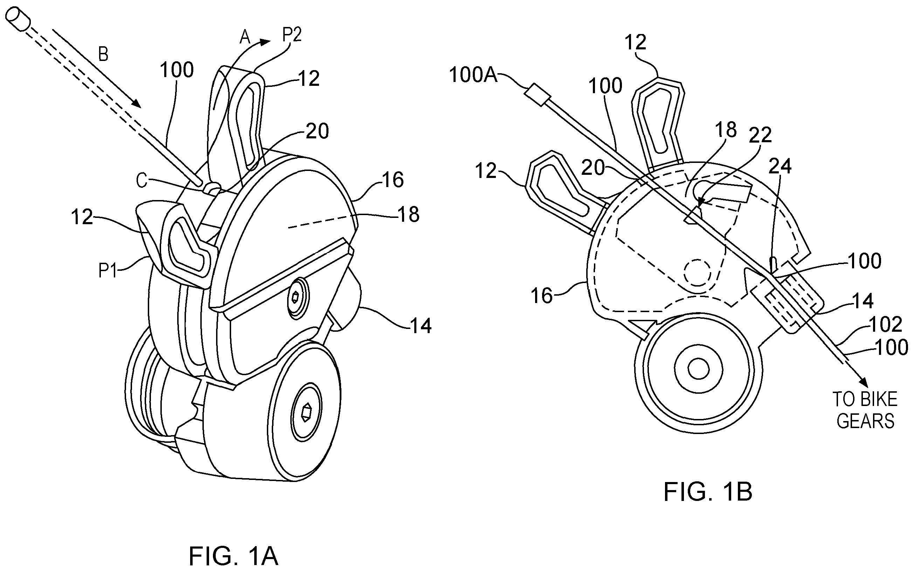

The present disclosure relates to a bicycle component, and in particular a device 10 for selecting the gear of a bicycle. Examples of such a device 10 are shown with reference to the disclosure from each of Figures 1A-3B, as will be described in further detail in due course. In this respect, for each such device 10, the device typically comprise a lever 12, or other actuator, for selecting a particular required gear of the bicycle, such as any of a first, second, third or fourth gear of the bicycle (depending on how many gears the bicycle has). Once the actuator/lever 12 is depressed, the actuator/lever is then linked to an actuator cable 100 which then extends out the device 10, such as via an outlet orifice 14 (as shown in the embodiment from Figures 1A and 1B for instance) towards the gearing portion of the bicycle, to implement the gear change to the appropriate gear as selected using the lever 12 of the device 10.

Noting the above, the present disclosure in more detail relates to mechanisms for better allowing any such actuator cable 100 to be appropriately located inside the device 10 when it is in use. In this respect, and with reference to the disclosure from Figures 1A-1B initially, the device 10 comprises a casing 16 comprising a cavity 18 for receiving the actuator cable 100 inside the casing 16. Once fitted inside, and as noted above, the actuator cable 100 may be then configured, in accordance with some embodiments, to have a first end 100A inside the casing 16, and comprise a portion 102 which then projects through any provided outlet orifice 14 from the device 10.

There are many instances, however, when this actuator cable 100 will not be situated in the above position, and there may be several instances therefore when it is necessary to remove the actuator cable 100 from the device 10, with a view to then replacing the same, or a new, actuator cable 100 into the device 10 at a later stage. This might be, for instance, during a period of maintenance, or instances where it is necessary to replace the actuator cable 100.

Mindful of the above, to insert the actuator cable 100 into the device 10, a process for doing so is following the process as shown in accordance with Figures 1A and 1B. In this process therefore, a first step 'A' may be to move an actuator/lever 12 to a predetermined position P2 with respect to the casing 16 of the device 10. In this position P2, this exposes a first opening 20 in the casing 16 for allowing the cable 100 to be inserted into the cavity 18 through the first opening 20.

About this position P2, it may be seen the user then inserts the actuator cable 100 into the cavity 18 of the casing 16, by inserting the actuator cable 100 through the (exposed) first opening 20 in the casing 16. In so doing, the actuator cable 100 may be then located, and/or fed through, at least one internal component 22;24 of the casing 16, and then passed out through the outlet orifice 14. Once fully inserted, the first end 100A of the actuator cable 100 may be then accommodated/located inside the casing 16.

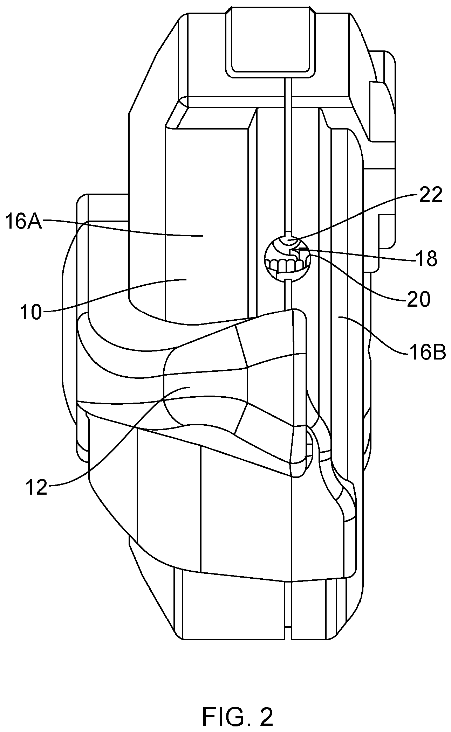

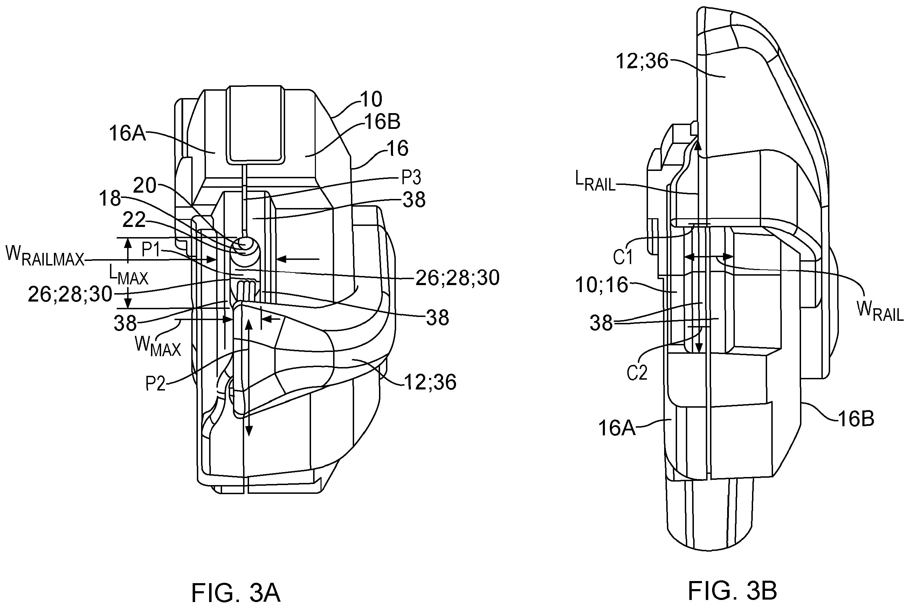

Noting the above operation, with reference to the embodiments from Figures 1A and 1B, and also the embodiment from Figure 2, it can be difficult to locate the actuator cable 100 inside the casing 16, and in particular through any at least one internal component 22;24 of the casing 16. This is because the cavity 18 inside the casing 16 can be very dark. This also combines with the fact that once the actuator cable 100 has been initially inserted through the first opening 20, the user then must insert the actuator cable 100 through the internal components 22;24 blind, since the user cannot then see through the first opening 20 (because the actuator cable 100 is blocking visibility through the first opening 20). Appreciating the above, and as illustrated in the embodiment of Figure 3A and 3B, the present disclosure in accordance with the invention also provides on the device 10 a viewing portion 26 configured for allowing light into the cavity 18 as the cable 100 is inserted into the cavity 18 through the first opening 20. With this viewing portion 26 therefore, the viewing portion 26 allows a user of the device 10 to observe into the cavity 18, through the viewing portion 26, when an actuator cable 100 is present inside the first opening 20. In this way therefore, with the provision of the viewing portion 26, the user is then able to insert the actuator cable 100 into the cavity 18 through the first opening 20 in a non-blind manner.

To place the above in context therefore, the viewing portion 26 in accordance with the invention is provided, at a general level, as part of a device 10 for selecting the gear of a bicycle, the device comprising a casing 16 comprising a cavity 18 for receiving an actuator cable 100 inside the casing 16; a first opening 20 in the casing 16 for allowing the cable 100 to be inserted into the cavity 18 through the first opening 20; and a viewing portion 26 configured for allowing light into the cavity 18 as the cable is inserted into the cavity 18 through the first opening 20. Such a device 100 is illustrated, for instance, in accordance with the embodiment from Figure 3A and 3B.

Where any such viewing portion 26 is employed, in accordance with the invention, the casing 16 conveniently comprises the viewing portion 26. Equally, and in accordance with some further embodiments, the viewing portion 26 may comprise a second opening in the casing, and/or the viewing portion may define a slot 28 in the casing 16 (such as shown in the embodiment of Figure 3A and 3B).

Staying with the geometry of the viewing portion 26, it may be appreciated that the viewing portion 26 may be suitably wide for it to provide as much light into the cavity 18 as possible. In this respect therefore, and in accordance with the invention, the viewing portion 26 comprises a maximum width (W_{MAX}) of at least 2mm, at least 2.5mm, at least 3mm, at least 3.5mm, at least 4mm, at least 5mm, at least 7mm, and/or at least 10mm.

Equally, to provide as much light into the cavity 18 as possible. In this respect therefore, and in accordance with some embodiments, the viewing portion 26 may comprise a maximum length (L_{MAX}) of at least 3mm, at least 3.5mm, at least 4mm, at least 5mm, at least 7mm, at least 10mm, at least 12mm, at least15mm, at least 18mm, and/or at least 20mm.

Noting the above dimensions however, to better prevent ingress of moisture or environmental detritus (such as pollen or grass) into the cavity 18, in accordance with some embodiments the viewing portion 26 may comprise a maximum width, and/or a maximum length, which are no more than any combination(s) of 40mm; no more than 35mm; no more than 30mm; no more than 25mm; no more than 20mm; no more than 19mm; no more than 17mm; no more than 16mm; no more than 13mm; no more than 11mm; and/or no more than 10mm.

For preventing moisture or environmental detritus (such as pollen or grass) from entering into the cavity 18 via any employed viewing portion 26, the viewing portion in accordance with some embodiments may also comprise a transparent portion and/or translucent portion of the casing.

Related to the above, in accordance with some embodiments, the viewing portion 26 may comprise a window 28, such as a window for viewing into the cavity 18. Where such a window 28 is employed, it may be appreciated that the window 28 in accordance with some embodiments could simply define an opening 30 for viewing into the cavity 18 (as shown in the embodiment from Figure 3A, for instance), such as an opening 30 in the casing 16. Equally the window 28, in accordance with some more particular embodiments, may further comprise a covering portion (not shown into the Figures) which covers the opening 30.

Where such a covering portion is employed, it may be appreciated that in some embodiments, the covering portion may be made of (transparent/translucent) plastic or glass, for instance. With such a covering portion therefore, as noted above, this may then help to prevent moisture or environmental detritus entering into the cavity 18.

As noted previously, in so far as the device 10 discussed herein is operable for selecting the gear of a bicycle, the device 10 is provided with one or more moveable actuator/components to better implement this functionality. For instance, and in accordance with invention, the device 10 comprises the actuator/lever 12 which is moveable with respect to the casing 16 for selecting the gear of the bicycle. Where any such lever 12 is employed as the particular form of user actuator from the device 10, it will be appreciated that this lever 12 is then moved, as required, about the device 10 for selecting the required gear of the bicycle. In a particularly convenient arrangement however, such as in the embodiment of Figure 3B, the lever 12 is configured to rotate about the casing for selecting the gear of the bicycle (as shown in the Figures 1A;1B and 3B, for instance). In this respect, this may be realised with reference to the particular embodiment from Figure 3B, where the lever 12 may be configured to move between a first circumferential position C1 about the casing (for use in selecting a first predetermined gear) and a second circumferential position C2 about the casing (for use in selecting a predetermined gear). In essence therefore, through moving the lever 12 (or any other form of user actuator from the device 10), this movement can thus be operable for selecting the required gear of the bicycle.

Relating to any such movement as part of the device 10, and returning to the function of the first opening 20, in accordance the invention (such as that shown in Figures 1A an 1B, and implicitly also the embodiments from Figures 2 and 3A-3B), the device 10 is configured to move between a first position P1 in which the first opening 20 is at least partially covered (or completely covered, in accordance with some narrower embodiments) for preventing the cable 100 to be inserted into the cavity 18 through the first opening 20; and a second position P2 in which the first opening 20 is exposed for allowing the allowing the cable 100 to be inserted into the cavity 18 through the first opening 20. In this way therefore, moisture or environmental detritus can be better prevented from entering into the cavity 18 through the first opening 20 not always being permanently exposed.

In the same way as well, in accordance with the invention, the device 10 is configured to move between a first position P1 in which the viewing portion 26 is at least partially covered (or completely covered, in accordance with some narrower embodiments); and a second position P2 in which the viewing portion 26 is exposed for allowing the light into the cavity. In this way therefore, moisture or environmental detritus can be better prevented from entering into the cavity 18 through the viewing portion 26 not always being permanently exposed.

Related to the above inhibiting of moisture or environmental detritus from entering into the device 10, this is also achieved in accordance with the invention through the device 10 further comprising a moveable portion 36 (such as the actuator/lever 12) which is configured to move, and/or rotate, between the first position P1 and the second position P2. In this way, in accordance to the invention, the first opening 20 may be configured to be at least partially covered (or completely covered) by the moveable portion 36 in the first position P1.

In accordance with some embodiments, for yet further inhibiting moisture or environmental detritus from entering into the device 10, in accordance with some embodiments, the moveable portion may be configured to be biased away from the second position P2 towards the first position P1. Appreciably, any such biasing, in accordance with some particular embodiments, could be achieved in some very particular embodiments through the device comprising a biasing portion, such as a resilient portion; a spring; and/or an elastic member, for biasing the moveable portion away from the second position P2 towards the first position P1.

Moving away from any such employed moveable portion 36, and returning to the viewing portion 26, for yet further improving the effectiveness of the viewing portion 26 to help the user view into the cavity 18, in accordance with some embodiments the viewing portion 26 may be located adjacent to the first opening 20. This may be seen at least with respect to the embodiment from Figures 3A-3B, where the viewing portion 26 is located adjacent to the viewing portion 20, and above the internal component 22. Related to this functionality, so that the user can also more easily see into the cavity 18 about multiple angles, in accordance with some embodiments (such as that shown in Figure 3A), it may be also seen that the viewing portion 26 may be configured to at least partially surround the first opening 20.

Thus in accordance with any viewing portion 26 which is employed in the devices 10 herein described, it may be appreciated that the shape and features of this viewing portion 26 may thus help the user, to observe into the cavity 18, and to also better spot any or all of the internal components 22;24 inside the casing 16 - even when the actuator cable 100 is being inserted into the cavity 18 through the first opening 20 (noting the cable 100 thus otherwise blocks visibility into the cavity 18 through the first opening 20).

With respect to any provided casing 16, in accordance with some embodiments where maintenance thereof is facilitated, the casing 16 may comprise a first casing portion 16A, and a second casing portion 16B which is configured to releasably engage with the first casing portion 16A to define the cavity 18 between the first casing portion 16A and the second casing portion 16B. In this way, the cavity 18 may be accessed (e.g. for maintenance, in some cases) by simply disengaging the second casing portion 16B and the first casing portion 16A. Where such first and second casing portions 16A;16B are employed, in accordance with some very particular embodiments, the casing 16 may be configured to provide an interference fit between the first casing portion 16A and the second casing portion 16B for releasably engaging the second casing portion 16B with the first casing portion 16A to define the cavity 18. Additionally/alternatively, in accordance with some more particular embodiments, the casing 16 may comprise at least one fastener which is engageable with the first casing portion 16A and the second casing portion 16B for releasably engaging the second casing portion 16B with the first casing portion 16A to define the cavity 18.

In accordance with some embodiments where the first and second casing portions 16A;16B are employed, in accordance with some embodiments thereof, for allowing more of the effective geometries such as those shown in Figures 2 and 3A-3B at least, the first casing portion 16A may comprise a first casing half, with the second casing portion 16B comprising a second casing half. In this way, the second casing half may be configured to releasably engage with the first casing half to define the cavity 18 between the first casing half and the second casing half.

Returning to the operation of any lever 12 which may be employed to move about the casing 16, such as move about either the above first and second casing portions 16A;16B where these portions are employed, it may be also seen that in accordance with some embodiments, to help facilitate movement of the level 12 with respect to this casing 16, in accordance with the invention the casing comprises a rail 38, such that the lever 12 is moveable along the rail 38 of the casing 12, for selecting the gear of the bicycle. Such a rail 38 can be seen with reference to the embodiment from Figures 3A and 3B at least, for example.

The rail 38 may have a suitable profile for allowing the lever 12 to move along the rail 38. In this respect therefore, the rail 38 may comprise a length (direction) L_{RAIL} along which the lever is configured to move, and may further comprise a width (direction) W_{RAIL} about which the lever 12 is configured to at least partially, or fully, traverse. This can be seen at least with reference to the embodiment from Figures 3A and 3B at least, where the lever 12 spans the width of the rail.

In so far as any rail 38 is therefore employed, the rail in accordance with some embodiments may form a part of both the first casing portion 16A and the second casing portion 16B. In this way, as the lever 12 moves along the rail 38, this may facilitate the engagement of the first casing portion 16A and the second casing portion 16B together (as can be seen in the embodiment of Figure 3B at least, where the moveable portion 36 and/or the lever 12 spans the width W_{RAIL} of the rail 38).

As to the geometries of the rail 38, as noted above, the rail 38 may comprise a length (direction) L_{RAIL} along which the moveable portion 36 and/or the lever 12 is configured to move, and a corresponding width (direction) W_{RAIL} which may be perpendicular to the length (direction) L_{RAIL}. With respect to such reference geometry for the rail 38, it has been found that a particularly effective location for either the first opening 20 and/or the viewing portion 26 is on the rail 38. In this way, the moveable portion 36 comprising the lever 12 is used to provide the mechanism for covering the first opening 20 and the viewing portion 26 in the first position P1. With respect to any such embodiments, to yet better prevent ingress of moisture or environmental detritus (such as pollen or grass) into the cavity 18, in accordance with the invention, the first opening 20 and the viewing portion 26 are entirely located on the rail 38. In this way, and in so far as then no portion is then located off or outside of the rail 38, this may then better allow for the moveable portion 36/lever 12 to cover the viewing portion when it is not in use (e.g. in the first position P1). Accordingly, with the above arrangement of the first opening 20 and the viewing portion 26 being located entirely on the rail 38, this has found to facilitate better reductions of inadvertent moisture or environmental detritus from entering into the cavity 18. Placing the above in context therefore, for better allowing these reductions in inadvertent moisture or environmental detritus from entering into the cavity 18, and returning to the maximum width (W_{MAX}) of the viewing portion 26 , the viewing portion 26 comprises a maximum width (W_{MAX}) which is no wider than a maximum width (W_{RAILMAX}) of the rail 38. Noting this, and with reference to some of the above noted potential widths for the viewing portion 26 as described previously, it may be appreciated in accordance with such embodiments that the maximum width (W_{RAILMAX}) of the rail 38 is larger than the maximum width (W_{MAX}) of the viewing portion 26 (as shown in the Figure 3A at least).

With reference to the above embodiments as well, where the first and second casing portions 16A;16B are employed, to help define the viewing portion 26 using fewer components, in accordance with some embodiments thereof (such as that shown in the embodiment from Figures 3A and 3B at least), the viewing portion 26 may be configured to be defined between the first casing portion 16A and a second casing portion 16B. In this way, when the second casing portion 16B releasably engages with the first casing portion 16A to define the cavity 18, the viewing portion 26 may thus be effectively provided, such as per the second opening or slot 28 in the casing 16, which is between the first casing portion 16A and the second casing portion 16B.

Mindful of the above described devices 10 for selecting the gear of a bicycle, it will be appreciated that any such device 10 may be located in an appropriate position on the bicycle for the user to operate the device 10. Appreciably therefore, the device in at least some embodiments may be configured to be attached to a handlebar portion of a bicycle (such as via a clip or some other engaging member). Appreciably as well therefore, the disclosure provided herein may thus also provide for a handlebar, for a bicycle, comprising the device 10 as set out above. As well, the disclosure provided herein may also provide for a bicycle comprising the device 10 as set out above.

In terms of any application/use of the device 10 described herein, it may be appreciated that any such uses may in accordance with the invention effectively provide for a method of inserting an actuator cable 100 into a device 10 for selecting the gear of a bicycle, the method comprising: allowing light into a cavity 18 of a casing 16 from the device 10, using a viewing portion 26 from the device 10; and inserting, whilst allowing the light into the cavity 18 using the viewing portion 26, the actuator cable 100 into the cavity 18 of the casing 16, by inserting the actuator cable 100 through a first opening 20 in the casing 16.

The method comprises the initial step of moving the device 10 from a first position P1, in which the first opening 20 is at least partially covered for preventing the actuator cable 100 to be inserted into the cavity 18 through the first opening 200, to a second position P2 in which the first opening 20 is exposed for allowing the allowing the cable 100 to be inserted into the cavity 18 through the first opening 20. With respect to any such method, and after the actuator cable 100 has been inserted into the cavity 18, in some cases the method may then further comprise moving the device 10 from the second position P2 to the first position P1 (such to re-cover the first opening 20).

With respect to any such methods described above, and as has been described herein, to better prevent ingress of moisture or environmental detritus (such as pollen or grass) into the cavity 18, in accordance with the method of the invention, the viewing portion 26 is at least partially, or completely, covered in the first position P1, by the moveable portion 36 comprising the actuator/lever 12 from the device 10.

Appreciating the foregoing therefore, there has accordingly been described a device for selecting the gear of a bicycle, the device comprising:
a casing comprising a cavity for receiving an actuator cable inside the casing;
a first opening in the casing for allowing the cable to be inserted into the cavity through the first opening; and
a viewing portion configured for allowing light into the cavity as the cable is inserted into the cavity through the first opening.

There has also been described a method of inserting an actuator cable into a device for selecting the gear of a bicycle, the method comprising:
allowing light into a cavity of a casing from the device, using a viewing portion from the device; and
inserting, whilst allowing the light into the cavity using the viewing portion, the actuator cable into the cavity of the casing, by inserting the actuator cable through a first opening in the casing.

There has also been described a device10 for selecting the gear of a bicycle. The device 10 comprises a casing 16 comprising a cavity 18 for receiving an actuator cable 100 inside the casing 16. The device also comprises a first opening 20 in the casing 16 for allowing the cable 100 to be inserted into the cavity 18 through the first opening 20. Also provided as part of the device 10 is a viewing portion 26 configured for allowing light into the cavity 18 as the cable 100 is inserted into the cavity 18 through the first opening 20. With this viewing portion 26 therefore, this makes it easier for the user of the device 10 to identify where the cable 100 needs to be inserted inside the casing 16, noting without the viewing portion 26 it can otherwise be very fiddly for the user to correctly insert the cable 100 into the casing 16 through the user having no visibility of what it is inside the casing 16.

In order to address various issues and advance the art, this disclosure shows by way of illustration various embodiments in which the claimed invention(s) may be practiced. The advantages and features of the disclosure are of a representative sample of embodiments only, and are not exhaustive and/or exclusive. They are presented only to assist in understanding and to teach the claimed invention(s). It is to be understood that advantages, embodiments, examples, functions, features, structures, and/or other aspects of the disclosure are not to be considered limitations on the disclosure as defined by the claims or limitations on equivalents to the claims, and that other embodiments may be utilised and modifications may be made without departing from the scope of the claims provided herein.

In this respect for instance, and with respect to any employed actuator or lever 12, it may be appreciated that in some embodiments, any number of actuators or levers 12 may be employed for selecting the gear of the bicycle, as required. Though particularly in embodiments where the lever 12 (actuator) is configured to move about a rail 38 from the casing 16, and where any employed viewing portion 26 is configured to be (completely) covered by the moveable portion 36/lever 12 in the first position P1, it may be appreciated in these embodiments that this function may be more effectively achieved where the device 10 comprises no more than one (actuator) lever 12 which is moveable with respect to the casing 16 for selecting the gear of the bicycle, as shown in the embodiment of Figures 3A and 3B for instance. In this way therefore, the actuator (lever) may be configured to serve the dual-role of both i) selecting the required gear of the bicycle; and ii) covering the viewing portion 26 in the first position P1 (i.e. when the first opening 20 is not in use).

It is to be appreciated as well that the first opening 20 and the viewing portion 26 could also be configured to be exposed in more than one position (i.e. not just the second position P2). Accordingly, in at least some embodiments, the device 10 may be further configured to move between the first position P1 and a third position P3, wherein the first position P1 is located between the second position P2 and the third position P3. In this way, the moveable portion 36 (and/or the lever 12 in particular, where the moveable portion 36 comprises the lever 12) may be configured to move between the first position P1 and the third position P3. In this way, and in this third position P3, the first opening 20 may be exposed for allowing the allowing the cable 100 to be inserted into the cavity 18 through the first opening 20. Further, in this third positon P3, the viewing portion 26 may be exposed.

Although not necessarily, where any such third position P3 is employed, the first position P1 may be located between the second position P2 and the third position P3. In this way, and from the first position P1, this may then provide the user of the device with easier access to the viewing portion 26 and the first opening 20, through the user being able to move the device from the first position P1 about two potential different directions (i.e. towards either the second position P2 or towards the third position P3), as opposed to being able to move about just one direction (towards the second position P2). Thus through the provision of this third position P3, it may be appreciated that access to both the viewing portion 26 and the first opening 20 may be further improved in the device 10.

Noting the foregoing therefore, it may be appreciated that various embodiments provided by this disclosure may suitably comprise, consist of, or consist essentially of, various combinations of the disclosed elements, components, features, parts, steps, means, etc. other than those specifically described herein. The present invention is defined and limited by the appended claims.

## Claims

1. A device, for selecting the gear of a bicycle, and configured to move between a first position (P1) and a second position (P2), the device comprising:
a casing (16) comprising a cavity for receiving an actuator cable (100) inside the casing, wherein the casing comprises a rail (38);
a lever (12) which is moveable with respect to the casing, and which is moveable along the rail of the casing, for selecting the gear of the bicycle;
a first opening (20) in the casing for allowing the cable to be inserted into the cavity through the first opening, wherein the first opening is entirely located within the rail;
a viewing portion (26) configured for allowing light into the cavity as the cable is inserted into the cavity through the first opening, wherein the viewing portion is entirely located within the rail, wherein the viewing portion comprises a maximum width which is at least 2mm and which is no wider than a maximum width of the rail; and
a moveable portion (36) which is configured to move between the first position and the second position, wherein the moveable portion comprises the lever;
wherein in the first position, the first opening is completely covered by the moveable portion for preventing the cable to be inserted into the cavity through the first opening; and wherein in the first position, the viewing portion is completely covered by the moveable portion; and
wherein in the second position, the first opening is exposed for allowing the cable to be inserted into the cavity through the first opening; and wherein in the second position, the viewing portion is exposed.

2. The device according to claim 1, wherein the viewing portion comprises a second opening or slot (28) in the casing.

3. The device according to any preceding claim, wherein the viewing portion comprises a transparent or translucent portion of the casing.

4. The device according to any preceding claim, wherein the viewing portion comprises a window.

5. The device according to any preceding claim, wherein the lever is configured to rotate about the casing for selecting the gear of the bicycle.

6. The device according to any preceding claim, wherein the viewing portion is located adjacent to the first opening and/or wherein the viewing portion at least partially surrounds the first opening.

7. The device according to any preceding claim, wherein the casing comprises:
a first casing portion (16A); and
a second casing portion (16B) which is configured to releasably engage with the first casing portion to define the cavity between the first casing portion and the second casing portion, wherein optionally the first casing portion comprises a first casing half, and wherein the second casing portion comprises a second casing half.

8. The device according to claim 7, wherein the viewing portion is configured to be defined between the first casing portion and the second casing portion and/or wherein the first opening is configured to be defined between the first casing portion and the second casing portion.

9. The device according to any preceding claim, wherein the device comprises no more than one lever which is moveable with respect to the casing for selecting the gear of the bicycle.

10. The device according to any preceding claim, wherein the device is further configured to move between the first position and a third position (P3), wherein the first position is located between the second position and the third position;
wherein the moveable portion is further configured to move between the first position and the third position; and
wherein the third position, the first opening is exposed for allowing the allowing the cable to be inserted into the cavity through the first opening; and wherein the third position, the viewing portion is exposed.

11. The device according to any of preceding claim, wherein the device is configured to be attached to a handlebar portion of a bicycle.

12. A handlebar, for a bicycle, comprising the device according to any preceding claim.

13. A bicycle comprising the device according to any of claims 1-11.

14. A method of inserting an actuator cable into a device for selecting the gear of a bicycle, the method comprising:
moving the device from a first position to a second position;
allowing, in the second position of the device, light into a cavity of a casing from the device, using a viewing portion from the device; and
inserting, in the second position of the device, and whilst allowing the light into the cavity using the viewing portion, the actuator cable into the cavity of the casing, by inserting the actuator cable through a first opening in the casing;
wherein moving the device from the first position to the second position comprises moving a moveable portion of the device which is configured to move between the first position and the second position; wherein the moveable portion comprises a lever from the device which is moveable with respect to the casing, and which is moveable along a rail of the casing, for selecting the gear of the bicycle;
wherein in the first position, the first opening is completely covered by the moveable portion for preventing the cable to be inserted into the cavity through the first opening; and wherein in the first position, the viewing portion is completely covered by the moveable portion; and
wherein in the second position, the first opening is exposed for allowing the cable to be inserted into the cavity through the first opening; and wherein in the second position, the viewing portion is exposed;
wherein the first opening is entirely located within the rail; and
wherein the viewing portion is entirely located within the rail; and wherein the viewing portion comprises a maximum width which is at least 2mm and which is no wider than a maximum width of the rail.

15. The method according to claim 14, wherein the method further comprises, after the actuator cable has been inserted into the cavity:
moving the device from the second position to the first position.

## Patentansprüche

1. Vorrichtung zum Auswählen des Gangs eines Fahrrads und konfiguriert, um sich zwischen einer ersten Position (P1) und einer zweiten Position (P2) zu bewegen, wobei die Vorrichtung umfasst:
Ein Gehäuse (16), das einen Hohlraum zur Aufnahme eines Betätigungskabels (100) im Inneren des Gehäuses, wobei das Gehäuse eine Schiene (38) umfasst;
einen Hebel (12), der in Bezug auf das Gehäuse beweglich ist und der entlang der Schiene des Gehäuses beweglich ist, um den Gang des Fahrrads auszuwählen;
eine erste Öffnung (20) im Gehäuse, um das Einführen des Kabels in den Hohlraum durch die erste Öffnung zu ermöglichen, wobei sich die erste Öffnung vollständig innerhalb der Schiene befindet;
einen Sichtabschnitt (26), der so konfiguriert ist, dass er Licht in den Hohlraum lässt, wenn das Kabel durch die erste Öffnung in den Hohlraum eingeführt wird, wobei sich der Sichtabschnitt vollständig innerhalb der Schiene befindet, wobei der Sichtabschnitt eine maximale Breite von mindestens 2 mm aufweist und nicht breiter als eine maximale Breite der Schiene ist; und einen beweglichen Abschnitt (36), der so konfiguriert ist, dass er sich zwischen der ersten Position und der zweiten Position bewegt, wobei der bewegliche Abschnitt den Hebel umfasst;
wobei in der ersten Position die erste Öffnung vollständig durch den beweglichen Abschnitt abgedeckt ist, um zu verhindern, dass das Kabel durch die erste Öffnung in den Hohlraum eingeführt wird; und wobei in der ersten Position der Sichtabschnitt vollständig durch den beweglichen Abschnitt abgedeckt ist; und
wobei in der zweiten Position die erste Öffnung exponiert ist, um dem Kabel zu ermöglichen, durch die erste Öffnung in den Hohlraum eingeführt zu werden; und wobei der Sichtabschnitt in der zweiten Position exponiert ist.

2. Vorrichtung nach Anspruch 1, wobei der Sichtabschnitt eine zweite Öffnung oder einen Schlitz (28) im Gehäuse umfasst.

3. Vorrichtung nach einem vorhergehenden Anspruch, wobei der Sichtabschnitt einen transparenten oder durchscheinenden Teil des Gehäuses umfasst.

4. Vorrichtung nach einem vorhergehenden Anspruch, wobei der Sichtabschnitt ein Fenster umfasst.

5. Vorrichtung nach einem vorhergehenden Anspruch, wobei der Hebel konfiguriert ist, sich um das Gehäuse zu drehen, um den Gang des Fahrrads auszuwählen.

6. Vorrichtung nach einem vorhergehenden Anspruch, wobei sich der Sichtabschnitt neben der ersten Öffnung befindet, und/oder wobei der Sichtabschnitt die erste Öffnung zumindest teilweise umgibt.

7. Vorrichtung nach einem vorhergehenden Anspruch, wobei das Gehäuse umfasst:
Einen ersten Gehäuseabschnitt (16A); und
einen zweiten Gehäuseabschnitt (16B), der so konfiguriert ist, dass er lösbar mit dem ersten Gehäuseabschnitt in Eingriff steht, um den Hohlraum zwischen dem ersten Gehäuseabschnitt und dem zweiten Gehäuseabschnitt zu definieren, wobei der erste Gehäuseabschnitt optional eine erste Gehäusehälfte umfasst und wobei der zweite Gehäuseabschnitt eine zweite Gehäusehälfte umfasst.

8. Vorrichtung nach Anspruch 7, wobei der Sichtabschnitt zwischen dem ersten Gehäuseabschnitt und dem zweiten Gehäuseabschnitt definiert ist, und/oder wobei die erste Öffnung so konfiguriert ist, dass sie zwischen dem ersten Gehäuseabschnitt und dem zweiten Gehäuseabschnitt definiert ist.

9. Vorrichtung nach einem vorhergehenden Anspruch, wobei die Vorrichtung nicht mehr als einen Hebel umfasst, der bezüglich dem Gehäuse beweglich ist, um den Gang des Fahrrads zu wählen.

10. Vorrichtung nach einem vorhergehenden Anspruch, wobei die Vorrichtung ferner konfiguriert ist, sich zwischen der ersten Position und einer dritten Position (P3) zu bewegen, wobei sich die erste Position zwischen der zweiten Position und der dritten Position befindet; wobei der bewegliche Abschnitt ferner so konfiguriert ist, dass er sich zwischen der ersten Position und der dritten Position bewegt; und
wobei in der dritten Position die erste Öffnung exponiert ist, um das Einführen des Kabels in den Hohlraum durch die erste Öffnung zu ermöglichen; und wobei in der dritten Position der Sichtabschnitt exponiert ist.

11. Vorrichtung nach einem der vorhergehenden Ansprüche, wobei die Vorrichtung so konfiguriert ist, dass sie an einem Lenkstangenteil eines Fahrrads befestigt werden kann.

12. Lenkstange für ein Fahrrad, welche die Vorrichtung gemäß einem vorhergehenden Anspruch umfasst.

13. Fahrrad, das die Vorrichtung gemäß einem der Ansprüche 1-11 umfasst.

14. Verfahren zum Einführen eines Betätigungskabels in eine Vorrichtung zum
Auswählen des Gangs eines Fahrrads, wobei das Verfahren umfasst:
Bewegen der Vorrichtung aus einer ersten Position in eine zweite Position;
Ermöglichen, dass, in der zweiten Position der Vorrichtung, Licht von der Vorrichtung in einen Hohlraum eines Gehäuses gelangt, wozu ein Sichtteil des Geräts verwendet wird; und
Einführen des Betätigungskabels in den Hohlraum des Gehäuses in der zweiten Position der Vorrichtung, während das Licht mithilfe des Sichtabschnitts in den Hohlraum gelangt, indem das Betätigungskabel durch eine erste Öffnung im Gehäuse eingeführt wird;
wobei das Bewegen der Vorrichtung aus der ersten Position in die zweite Position das Bewegen eines beweglichen Abschnitts der Vorrichtung umfasst, der so konfiguriert ist, dass er sich zwischen der ersten Position und der zweiten Position bewegt; wobei der bewegliche Abschnitt einen Hebel von der Vorrichtung umfasst, der in Bezug auf das Gehäuse beweglich ist und der entlang einer Schiene des Gehäuses beweglich ist, um den Gang des Fahrrads auszuwählen;
wobei in der ersten Position die erste Öffnung vollständig durch den beweglichen Abschnitt abgedeckt ist, um zu verhindern, dass das Kabel durch die erste Öffnung in den Hohlraum eingeführt wird; und wobei in der ersten Position der Sichtabschnitt vollständig durch den beweglichen Abschnitt abgedeckt ist; und
wobei in der zweiten Position die erste Öffnung exponiert ist, damit das Kabel durch die erste Öffnung in den Hohlraum eingeführt werden kann; und wobei der Sichtabschnitt in der zweiten Position exponiert ist;
wobei sich die erste Öffnung vollständig innerhalb der Schiene befindet; und
wobei sich der Sichtabschnitt vollständig innerhalb der Schiene befindet; und wobei der Sichtabschnitt eine maximale Breite von mindestens 2 mm aufweist und nicht breiter als die maximale Breite der Schiene ist.

15. Verfahren nach Anspruch 14, wobei das Verfahren weiterhin umfasst, nachdem das Betätigungskabel in den Hohlraum eingeführt wurde:
Bewegen der Vorrichtung aus der zweiten Position in die erste Position.

## Revendications

1. Dispositif de sélection de vitesse d'une bicyclette, configuré pour se déplacer entre une première position (P1) et une deuxième position (P2), le dispositif comprenant :
un boîtier (16) comportant une cavité pour recevoir un câble d'actionneur (100) à l'intérieur du boîtier, dans lequel le boîtier est doté d'un rail (38) ;
un levier (12) déplaçable par rapport au boîtier, et qui peut être déplacé le long du rail du boîtier pour sélectionner la vitesse de la bicyclette ;
une première ouverture (20) située dans le boîtier pour permettre l'insertion du câble dans la cavité à travers la première ouverture, dans lequel la première ouverture est intégralement située à l'intérieur du rail ;
une partie de visualisation (26) configurée pour laisser entrer de la lumière dans la cavité lorsque le câble est inséré dans la cavité à travers la première ouverture, dans lequel la partie de visualisation est intégralement située à l'intérieur du rail, dans lequel la partie de visualisation comprend une largeur maximale d'au moins 2 mm et qui n'est pas plus large qu'une largeur maximale du rail ; et
une partie déplaçable (36) qui est configurée pour se déplacer entre la première position et la deuxième position, dans lequel la partie déplaçable comporte le levier ;
dans lequel, lorsque le dispositif est dans la première position, la première ouverture est intégralement recouverte par la partie déplaçable pour éviter que le câble ne soit inséré dans la cavité à travers la première ouverture ; et dans lequel, lorsque le dispositif est dans la première position, la partie de visualisation est intégralement recouverte par la partie déplaçable ; et
dans lequel, lorsque le dispositif est dans la deuxième position, la première ouverture est exposée pour permettre l'insertion du câble dans la cavité à travers la première ouverture , et dans lequel, lorsque le dispositif est dans la deuxième position, la partie de visualisation est exposée.

2. Dispositif selon la revendication 1, dans lequel la partie de visualisation comprend une seconde ouverture ou rainure (28) située dans le boîtier.

3. Dispositif selon l'une quelconque des revendications précédentes, dans lequel la partie de visualisation comprend une partie transparente ou translucide du boîtier.

4. Dispositif selon l'une quelconque des revendications précédentes, dans lequel la partie de visualisation comprend une fenêtre.

5. Dispositif selon l'une quelconque des revendications précédentes, dans lequel le levier est configuré pour tourner autour du boîtier et ainsi sélectionner la vitesse de la bicyclette.

6. Dispositif selon l'une quelconque des revendications précédentes, dans lequel la partie de visualisation est située à proximité de la première ouverture et/ou dans lequel la partie de visualisation, au moins en partie, entoure la première ouverture.

7. Dispositif selon l'une quelconque des revendications précédentes, dans lequel le boîtier comprend :
une première partie du boîtier (16A) ; et
une seconde partie du boîtier (16B) qui est configurée pour s'enclencher de façon amovible avec la première partie du boîtier pour définir la cavité entre la première partie du boîtier et la seconde partie du boîtier, dans lequel facultativement la première partie du boîtier comporte une première moitié du boîtier, et dans lequel la seconde partie du boîtier comprend une seconde moitié du boîtier.

8. Dispositif selon la revendication 7, dans lequel la partie de visualisation est configurée pour être définie entre la première partie du boîtier et la seconde partie du boîtier, et/ou dans lequel la première ouverture est configurée pour être définie entre la première partie du boîtier et la seconde partie du boîtier.

9. Dispositif selon l'une quelconque des revendications précédentes, dans lequel le dispositif ne comprend pas plus d'un levier qui est déplaçable par rapport au boîtier pour sélectionner la vitesse de la bicyclette.

10. Dispositif selon l'une quelconque des revendications précédentes, dans lequel le dispositif est en outre configuré pour se déplacer entre la première position et une troisième position (P3), dans lequel la première position est située entre la deuxième position et la troisième position ;
dans lequel la partie déplaçable est en outre configurée pour se déplacer entre la première position et la troisième position ; et
dans lequel, lorsque le dispositif est dans la troisième position, la première ouverture est exposée pour permettre l'insertion du câble dans la cavité à travers la première ouverture et, lorsque le dispositif est dans la troisième position, la partie de visualisation est exposée.

11. Dispositif selon l'une quelconque des revendications précédentes, dans lequel le dispositif est configuré pour être fixé à une partie du guidon d'une bicyclette.

12. Guidon, d'une bicyclette, comprenant le dispositif selon l'une quelconque des revendications précédentes.

13. Bicyclette comprenant le dispositif selon l'une quelconque des revendications 1 à 11.

14. Procédé d'insertion d'un câble d'actionneur dans un dispositif pour sélectionner la vitesse d'une bicyclette, le procédé consistant à :
déplacer le dispositif d'une première position sur une deuxième position ;
laisser entrer, lorsque le dispositif est dans la deuxième position, de la lumière dans une cavité d'un boîtier à partir du dispositif, en utilisant une partie de visualisation du dispositif ; et
insérer, lorsque le dispositif est dans la deuxième position et en laissant entrer la lumière dans la cavité en utilisant la partie de visualisation, le câble d'actionneur dans la cavité du boîtier, en insérant le câble de l'actionneur à travers une première ouverture située dans le boîtier ;
dans lequel le déplacement du dispositif de la première position sur la deuxième position consiste à :
déplacer une partie déplaçable du dispositif qui est configurée pour se déplacer entre la première position et la deuxième position, dans lequel la partie déplaçable comporte un levier du dispositif qui est déplaçable par rapport au boîtier, et qui est déplaçable le long d'un rail du boîtier, pour sélectionner la vitesse de la bicyclette ;
dans lequel, lorsque le dispositif est dans la première position, la première ouverture est intégralement recouverte par la partie déplaçable pour éviter que le câble ne soit inséré dans la cavité à travers la première ouverture ; et dans lequel, lorsque le dispositif est dans la première position, la partie de visualisation est intégralement recouverte par la partie déplaçable ; et
dans lequel, lorsque le dispositif est dans la deuxième position, la première ouverture est exposée pour permettre l'insertion du câble dans la cavité à travers la première ouverture , et dans lequel, lorsque le dispositif est dans la seconde position, la partie de visualisation est exposée,
dans lequel la première ouverture est intégralement située à l'intérieur du rail ; et
dans lequel la partie de visualisation est intégralement située à l'intérieur du rail ; et dans lequel la partie de visualisation comprend une largeur maximale d'au moins 2 mm et qui n'est pas plus large qu'une largeur maximale du rail.

15. Procédé selon la recommandation 14, dans lequel le procédé consiste en outre à, une fois le câble d'actionneur inséré dans la cavité :
déplacer le dispositif de la deuxième position sur la première position.
